# EUROPEAN PATENT APPLICATION

(11) **EP 2 163 942 A1**
(43) Date of publication of application: **17.03.2010**
(21) Application number: 08740057.8
(22) Date of filing: 08.04.2008
(51) Int. Cl.: G02F 1/1343, G02F 1/1335, G02F 1/1337, G02F 1/1368, G02F 1/139

(54) **LIQUID CRYSTAL DISPLAY DEVICE**

(30) Priority: 02.07.2007 JP 2007174444
(71) Applicant: Sharp Kabushiki Kaisha, Osaka-shi, Osaka 545-8522 (JP)
(72) Inventor: YOSHIDA, Hiroshi, Osaka-shi, Osaka 545-8522 (JP); KAISE, Yasuyoshi, Osaka-shi, Osaka 545-8522 (JP); TASKA, Yasutoshi, Osaka-shi, Osaka 545-8522 (JP); NAKAJIMA, Mutsumi, Osaka-shi, Osaka 545-8522 (JP)
(74) Representative: Müller - Hoffmann & Partner
(86) International application number: PCT/JP2008/056954
(87) International publication number: WO 2009/004849

(57) **Abstract**

A liquid crystal display device (10) of the present invention comprises a liquid crystal panel in which a plurality of pixel electrodes (2) are arranged, wherein: shapes of the pixel electrodes (2) are asymmetric, and the pixel electrodes (2) are categorized into plural types whose shapes are different from each other (that is, pixel electrodes A and pixel electrodes B). The liquid crystal panel is configured so that the pixel electrodes of the plural types (that is, pixel electrodes A and pixel electrodes B) are arranged in a regular manner, and the pixel electrodes of the plural types are populated with equal ratios. Thus, in the liquid crystal display device comprising pixel electrodes having a horizontally asymmetric shape viewed from an observer of the liquid crystal panel, a manner in which pixel electrodes of respective types are arranged is changed, thereby improving display quality.

## Description

### Technical Field

The present invention relates to a liquid crystal display device including pixel electrodes of plural types different in shape. More specifically, the present invention relates to a vertically aligned mode liquid crystal display device in which a liquid crystal panel includes pixel electrodes of plural types, wherein each pixel electrode includes at least two sub pixel electrodes and positions of connection sections for connecting the sub pixel electrodes are different from each other so that the pixel electrodes of the plural types are different in shape and liquid crystal molecules are inclined axis-symmetrically with respect to a predetermined alignment central axis vertical to a face of each sub pixel electrode by voltage application.

### Background Art

Conventionally, a TN (Twisted Nematic) mode liquid crystal display device has been widely used as a liquid crystal display device. In a liquid crystal layer of the TN mode liquid crystal display device, rubbing directions of two alignment films, i.e., upper and lower alignment films are varied so that each liquid crystal molecule twists (twist alignment) without application of any voltage. In the TN mode liquid crystal display device, display quality greatly depends on a viewing angle.

There is proposed a VA (Vertically Aligned) mode using (a) a liquid crystal material having a negative dielectric anisotropy and (b) a vertical alignment film. In the vertically aligned mode, black display is carried out without application of any voltage. A birefringence caused by a liquid crystal layer vertically aligned without application of any voltage is virtually compensated by using a retardation film having a negative refractive index anisotropy, so that it is possible to realize favorable black display at a wide viewing angle. Thus, it is possible to realize such display that contrast is high at a wide viewing angle.

An example of the vertically aligned (VA) mode liquid crystal display device is a technique disclosed by Patent Literature 1.

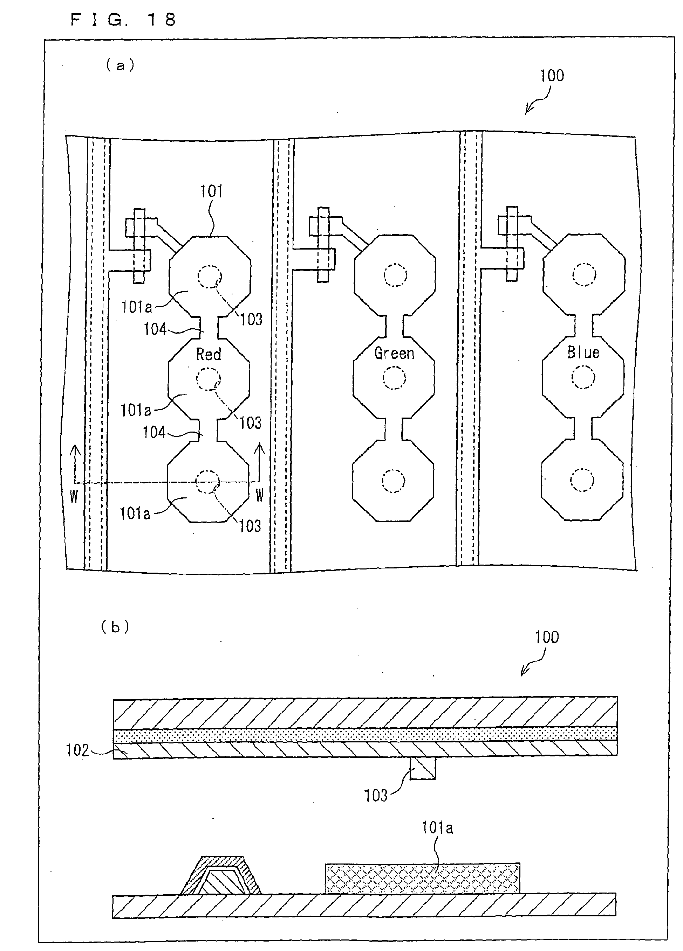

In the liquid crystal display device 100, as illustrated in Fig. 18(a), a pixel electrode 101 includes sub pixel electrodes 101a. As illustrated in Fig. 18(b), a counter electrode 102 opposite to the pixel electrode 101 includes a convex rivet section 103 positioned in a center of each sub pixel electrode 101a.

Due to this configuration, an electric field vertical to a face of each electrode which occurs between each sub pixel electrode 101a and the counter electrode 102 can be inclined. Thus, in the vertically aligned mode, liquid crystal molecules are inclined axis-symmetrically by voltage application, so that dependency on a viewing angle is more uniformed than in a case where the liquid crystal molecules are inclined only in one direction. As a result, it is possible to realize very favorable viewing property in all directions.

Incidentally, in the conventional liquid crystal display device, as illustrated in Fig. 18(a), a central position of a bridge 104 serving as a connection electrode for connecting the plural sub pixel electrodes 101a is identical to a central position of each sub pixel electrode 101a and to a central position of the rivet section 103 so that a shape thereof is symmetrical.

However, in this arrangement, an electric field effect of the bridge 104 and an alignment regulating force of the rivet 103 are symmetric, and the bridge 104 has a certain width, so that the alignment central axis of liquid crystal molecules which is formed therein deviates to either a left side or a right side. Conventional design fails to control a direction in which the alignment central axis deviates, so that this causes lower display quality such as roughness, burning, afterimage, and the like.

In order to solve the foregoing problem, Patent Literature 2 discloses a liquid crystal display device in which sub pixel electrodes constituting a pixel electrode are connected to each other by connection electrodes and the connection electrodes (bridges) are provided in an asymmetric manner with respect to the sub pixel electrodes. In this manner, positions of the bridges are different from each other, so that an alignment singular point deviates from a center line of the sub pixel electrodes. Thus, it is possible to prevent display quality deterioration such as unevenness, roughness, and afterimage, which are caused by disorder of alignment of liquid crystal molecules based on the bridges connecting the sub pixel electrodes.

Further, Patent Literature 3 discloses a liquid crystal display device in which each of the bridges (connection sections) deviates from a center of the electrode section to either the left side or the right side in a width direction of the electrode section.

### Citation List

Patent Literature 1
   Japanese Patent Application Publication, Tokukai, No. 2005-215352 A (Publication Date: August 11, 2005)
Patent Literature 2
   International Publication, 2007/039967 A1 (Publication Date: April 12, 2007)
Patent Literature 3
   Japanese Patent Application Publication, Tokukai, No. 2006-184507 A (Publication Date: July 13, 2006)

### Summary of Invention

However, as described above, if the connection electrodes of all the pixels deviate in the same direction with respect to the sub pixel electrodes in the arrangement in which the connection electrodes are provided in an asymmetric manner with respect to the sub pixel electrodes, liquid crystal molecules in the vicinity of each connection electrode are inclined in only one direction (left direction or right direction). In this manner, liquid crystal molecules in the vicinity of each connection electrode are aligned in an uneven manner, so that an image displayed in a liquid crystal panel including pixel electrodes is differently viewed depending on a viewing angle. Specifically, in case of observing the display device from the left side and from the right side, an image displayed therein is differently viewed.

The present invention was made in view of the foregoing problem, and an object of the present invention is to improve display quality by changing a manner in which pixel electrodes of respective types are disposed in a liquid crystal display device including pixel electrodes which are asymmetric in left and right directions in a liquid crystal panel viewed by an observer.

In order to solve the problem, a liquid crystal display device according to the present invention comprises a liquid crystal panel in which a plurality of pixel electrodes are arranged, wherein: shapes of the pixel electrodes are asymmetric, and the pixel electrodes are categorized into plural types different in shape, and the liquid crystal panel is configured so that the pixel electrodes of the plural types are alternated in a regular manner, and the pixel electrodes of the plural types are populated with equal ratios.

In case of using only pixel electrodes of one type which have asymmetric shapes in the liquid crystal display device, liquid crystal molecules of the respective pixel electrodes are aligned only in a left direction or only in a right direction, so that a displayed image is differently viewed when the liquid crystal display device is observed from both left and right directions.

As described above, in the present invention, pixel electrodes having asymmetric shapes are constituted of pixel electrodes of plural types whose shapes are different from each other. According to this configuration, alignment states of liquid crystal molecules of the respective pixel electrodes can be made different from each other. Here, the wording "asymmetric shapes" means that shapes of the pixel electrodes are asymmetric at least in any one direction out of a horizontal direction, a vertical direction, and an oblique direction when the liquid crystal panel is viewed by an observer.

Further, according to the foregoing configuration, the pixel electrodes of different types are arranged in a regular manner, and the pixel electrodes of respective types are populated with equal ratios, so that it is possible to suppress liquid crystal molecules of the pixel electrodes from being aligned only in one direction. Thus, in case where the display device is observed from left and right directions, it is possible to suppress a displayed image from being so differently viewed. As a result, in the liquid crystal display device comprising pixel electrodes of plural types whose shapes are different from each other, it is possible to improve display quality. Note that, the wording "populated with equal ratios" means that a ratio of pixel electrodes of one type is equal to a ratio of pixel electrodes of other type in terms of a numerical quantity in case where a specific area in the display region is viewed.

Here, the phrase "the pixel electrodes of the plural types are arranged in a regular manner" means that: for example, in the liquid crystal display device in which pixel electrodes are arranged in a lattice manner, pixel electrodes are arranged so that shapes of pixel electrodes in one line are different from shapes of pixel electrodes in other line, or pixel electrodes having shapes different from each other are arranged in a checkered manner, that is, pixel electrodes of respective types are regularly arranged.

It is preferable to configure the liquid crystal display device of the present invention so that: each of the pixel electrodes includes a combination of at least two sub pixel electrodes, and a connection section for connecting the sub pixels, the connecting section having a width narrower than a width of each of the sub pixels, and the difference in shape of the pixel electrodes of the plural types is attributed to difference as to where the connection section is.

According to the foregoing configuration, a single pixel electrode is divided into two or more sub pixel electrodes, so that it is possible to enhance a response speed. The pixel electrodes are different from each other only in terms of a position of the connection section so that shapes of the pixel electrodes are different from each other. This allows the shapes of the pixel electrodes to be basically identical to each other, so that it is possible to prevent a step of forming pixel electrodes from being complicated. Further, in case where the liquid crystal panel is viewed from its front direction, it is possible to realize display quality almost equal to display quality observed in case where all the shapes of the pixel electrodes are identical to each other.

It is preferable to configure the liquid crystal display device of the present invention so that: the liquid crystal panel is based on a vertically aligned mode, and the connection section is positioned so as to deviate from an axis connecting centers of the sub pixel electrodes.

According to the foregoing configuration, in the vertically aligned mode liquid crystal panel, it is possible to stabilize the alignment center of liquid crystal molecules.

It is preferable to configure the liquid crystal display device of the present invention so that: the pixel electrodes are categorized into two types in terms of their shapes, and the pixel electrodes of the two types respectively include connection sections which are symmetrically located with respect to an axis connecting centers of sub pixel electrodes.

According to the foregoing configuration, alignment states of liquid crystal molecules can be made equal to each other in both directions extending from an axis connecting centers of the sub pixel electrodes.

Thus, if the pixel electrodes are arranged so that the axis connecting the centers of the sub pixel electrodes is in a vertical direction (up-and-down direction) viewed by an observer of the liquid crystal panel, a displayed image can be more evenly viewed in case where the display device is observed from left and right directions.

It is preferable to configure the liquid crystal display device of the present invention so as to further comprise color filters of plural colors, wherein the color filters of plural colors are provided in association with the pixel electrodes, respectively and the pixel electrodes of the plural types whose colors are identical to each other and whose shapes are different from each other are populated with equal ratios.

According to the foregoing configuration, in case where each displayed color is viewed from left and right directions, it is possible to suppress the displayed color from being differently viewed. Thus, a display property in left and right directions can be made evener. Note that, examples of the plural colors include three colors, e.g., red (R), green (G), and blue (B), or four colors, e.g., red (R), green (G), blue (B), and white (W).

In the liquid crystal display device of the present invention, the pixel electrodes are aligned in rows by being connected respectively with the gate wirings via the switching elements, in such a manner that the pixel electrodes in each row are shifted from pixel electrodes in a row adjacent to that row by a half pitch (a half of a width of each pixel electrode) in a direction in which the gate wirings extend. This configuration is a so-called delta arrangement. The present invention is applicable to such a pixel electrode arrangement.

That is, the liquid crystal display device of the present invention may be configured so that: the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and the pixel electrodes are aligned in rows by being connected respectively with the gate wirings via the switching elements, in such a manner that the pixel electrodes in each row are shifted from pixel electrodes in a row adjacent to that row by a half of a width of the pixel electrodes in a direction in which the gate wirings extend.

According to the foregoing configuration, the respective pixel electrodes are arranged as a delta arrangement, so that it is possible to display a smooth image.

It is preferable to configure the liquid crystal display device of the present invention so that: the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and the pixel electrodes are connected to the gate wirings and the source wirings via the switching element, respectively, and an arrangement of pixel electrodes electrically connected to the source wiring or the gate wiring includes pixel electrodes of different types.

According to the foregoing configuration, in case where the liquid crystal display panel is viewed from left and right directions, it is possible to further suppress a display state from being differently viewed.

It is preferable to configure the liquid crystal display device of the present invention so that: the pixel electrodes are categorized into two types in terms of their shapes, and the pixel electrodes of the two types are alternated in a checkered manner.

According to the foregoing configuration, directions in which liquid crystal molecules of pixel electrodes adjacent to each other are aligned can be made different from each other, and the pixels of two types can be populated with equal ratios. Thus, it is possible to prevent display quality deterioration such as roughness, burning, afterimage, and the like, which are caused by disorder of alignment of liquid crystal molecules when the liquid crystal panel is viewed from any direction.

Further, the liquid crystal display device of the present invention may be configured so that: the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and the pixel electrodes are connected to the gate wirings and the source wirings via the switching element, respectively, and the pixel electrodes are categorized into two types in terms of their shapes, and the pixel electrodes of the two types are alternately arranged so that each pixel electrode of each type is disposed along each source wiring.

Further, the liquid crystal display device of the present invention may be configured so that: the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and the pixel electrodes are connected to the gate wirings and the source wirings via the switching element, respectively, and the pixel electrodes are categorized into two types in terms of their shapes, and the pixel electrodes of the two types are alternately arranged so that each pixel electrode of each type is disposed along each gate wiring.

Additional objects, features, and strengths of the present invention will be made clear by the description below. Further, the advantages of the present invention will be evident from the following explanation in reference to the drawings.

### Brief Description of Drawings

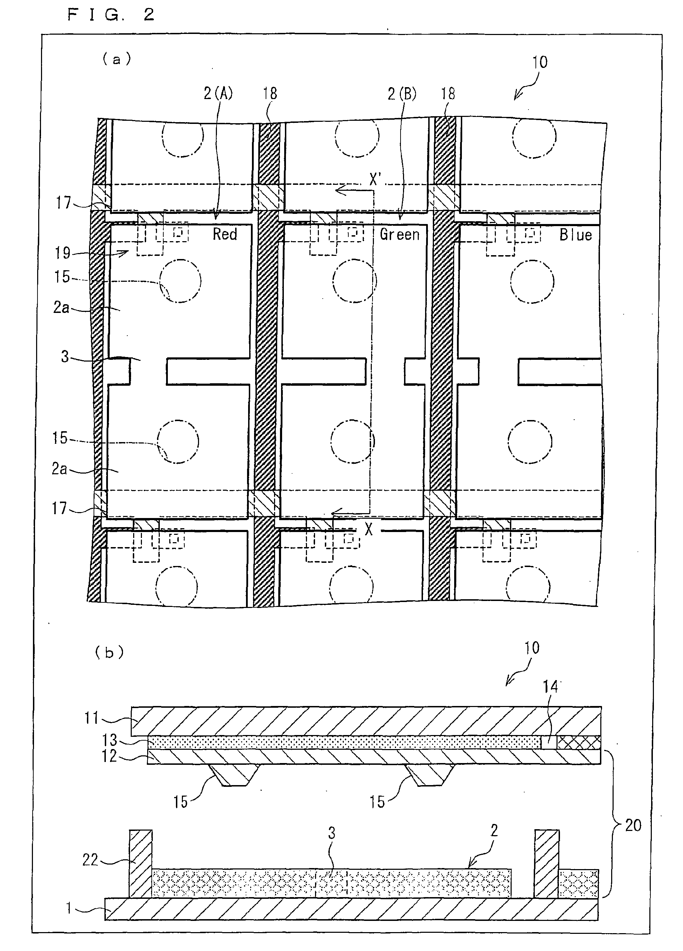

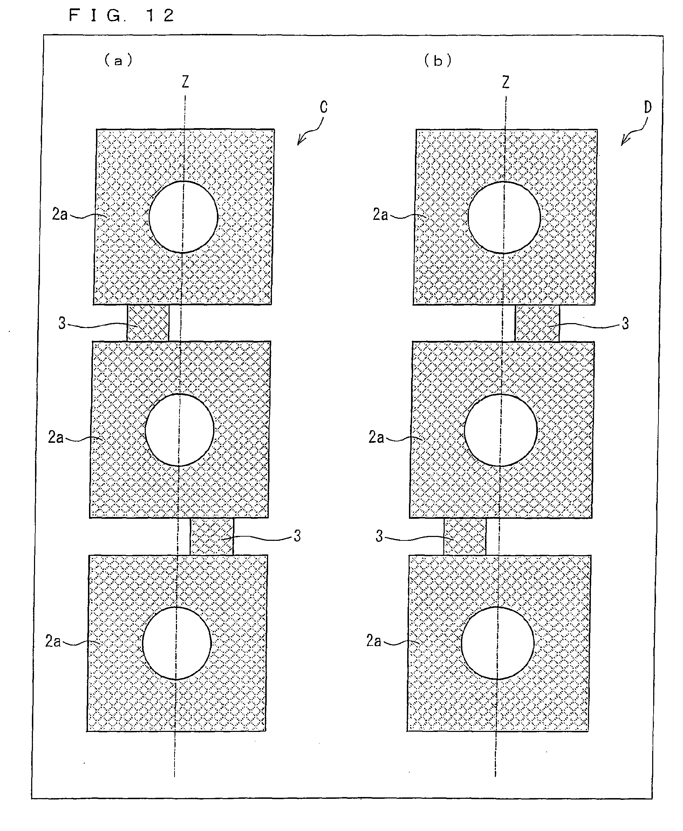

Fig. 1

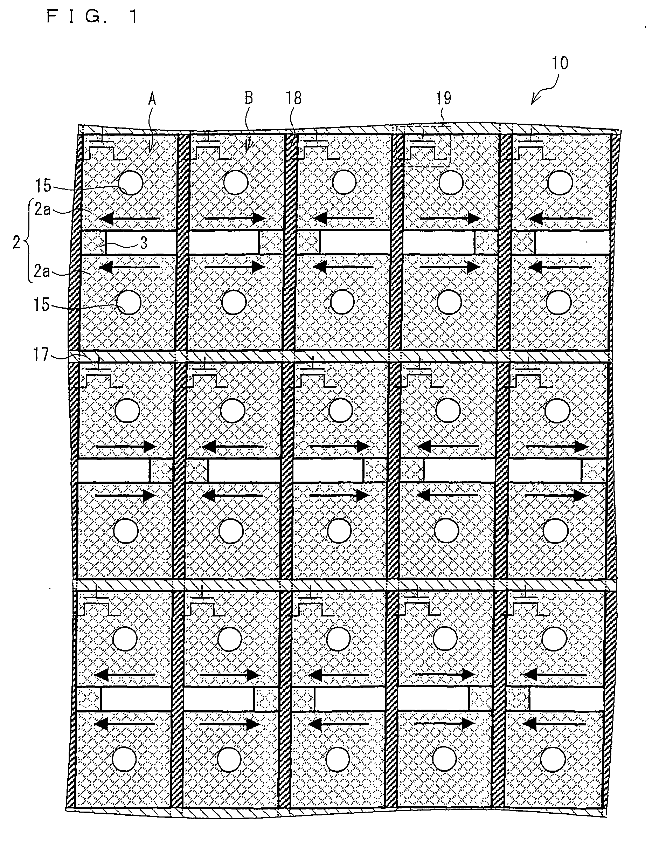

   Fig. 1 is a plan view illustrating a configuration of pixel electrodes of a liquid crystal display device according to Embodiment 1 of the present invention.
Fig. 2
   (a) of Fig. 2 is a plan view illustrating a basic configuration of a liquid crystal display device according to the present invention and illustrating pixels provided on a liquid crystal panel in the device. (b) of Fig. 2 is a cross sectional view taken along X-X' of (a).
Fig. 3

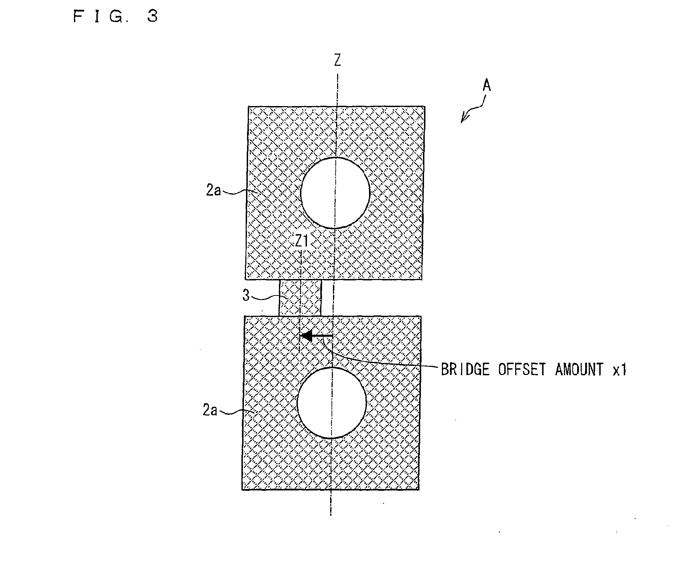

   Fig. 3 illustrates a shape of one type of a pixel electrode constituting the liquid crystal display device. The pixel electrode illustrated in this drawing is such that its bridge deviates from a center line to a left side.
Fig. 4

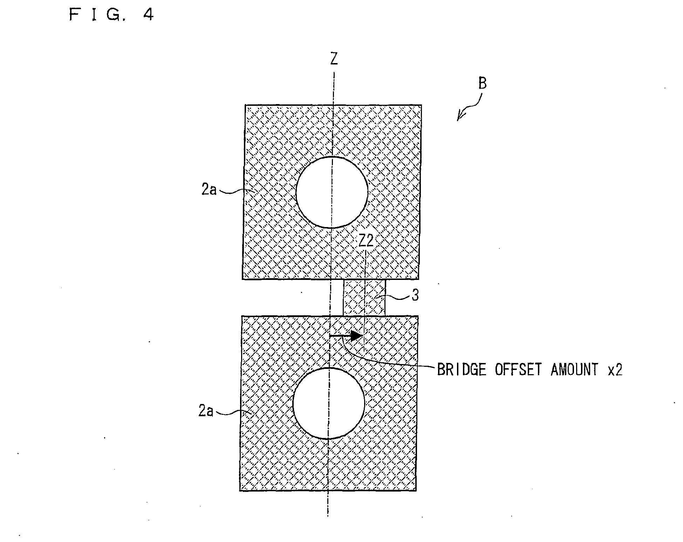

   Fig. 4 illustrates a shape of another type of a pixel electrode which constitutes the liquid crystal display device and which is different from the pixel electrode of Fig. 4. The pixel electrode illustrated in this drawing is such that its bridge deviates from a center line to a right side.
Fig. 5

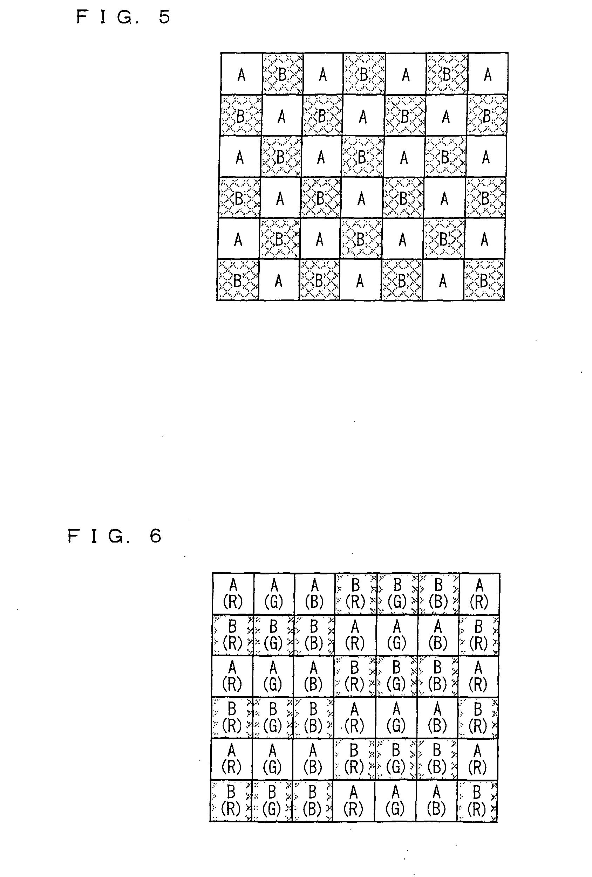

   Fig. 5 illustrates an example of an arrangement of pixel electrodes in the liquid crystal display deice of Embodiment 1. In this drawing, pixel electrodes A and pixel electrodes B are alternately arranged in a checkered manner.
Fig. 6
   Fig. 6 illustrates another example of an arrangement of pixel electrodes in the liquid crystal display device of Embodiment 1. In this drawing, pixel electrodes of respective colors (R, G, B) are combined as a single set and pixel electrodes A and pixel electrodes B are alternately arranged in a checkered manner.
Fig. 7

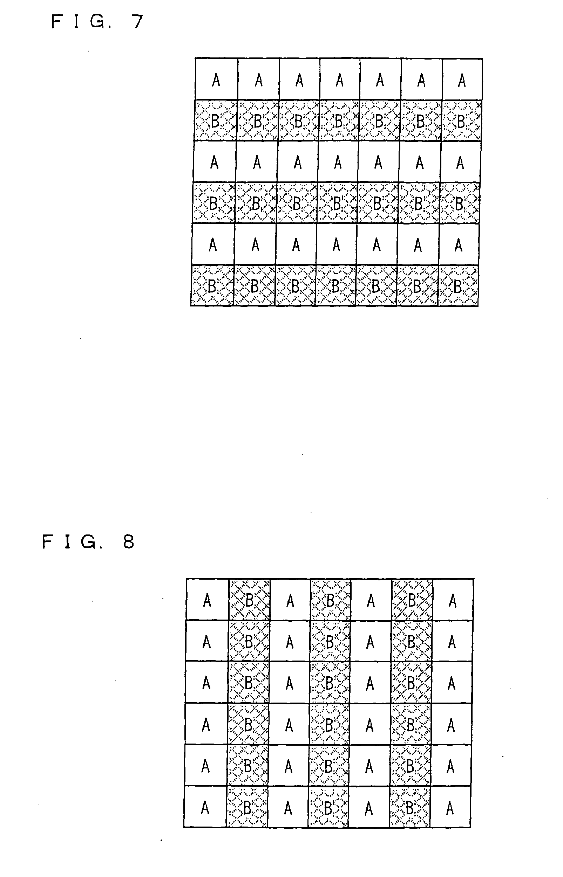

   Fig. 7 illustrates another example of an arrangement of pixel electrodes in the liquid crystal display device of Embodiment 1. In this drawing, pixel electrodes A and pixel electrodes B are alternately arranged so that the pixel electrodes A are positioned along a gate wiring as one line and electrodes B are positioned along a gate wiring as another line.
Fig. 8
   Fig. 8 illustrates another example of an arrangement of pixel electrodes in the liquid crystal display device of Embodiment 1. In this drawing, pixel electrodes A and pixel electrodes B are alternately arranged so that the pixel electrodes A are positioned along a source wiring as one line and electrodes B are positioned along a source wiring as another line.
Fig. 9

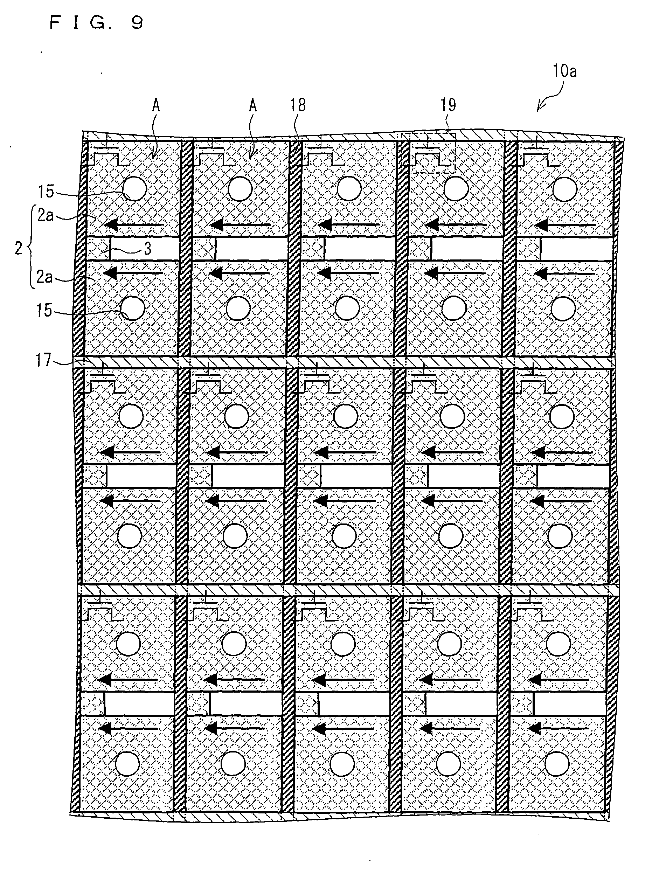

   Fig. 9 illustrates a comparative example of the liquid crystal display device according to Embodiment 1 and is a plan view of the liquid crystal display device configured so that pixel electrodes whose shapes are identical to each other are arranged.
Fig. 10

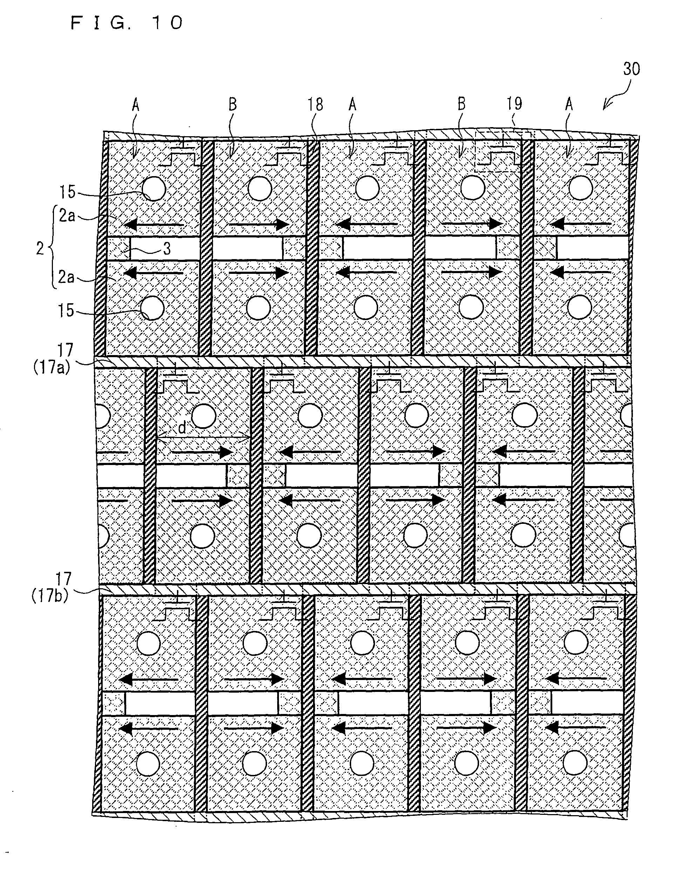

   Fig. 10 is a plan view illustrating a configuration of pixel electrodes of a liquid crystal display device according to Embodiment 2 of the present invention.
Fig. 11

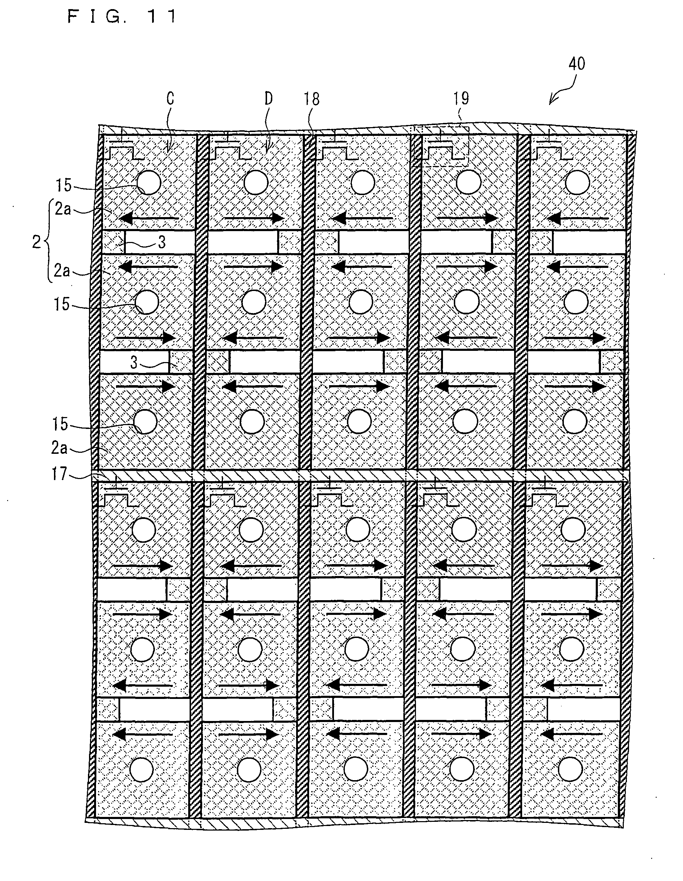

   Fig. 11 is a plan view illustrating a configuration of pixel electrodes of a liquid crystal display device according to Embodiment 3 of the present invention.
Fig. 12
   Each of (a) and (b) of Fig. 12 illustrates each type of a pixel electrode constituting the liquid crystal display device.
Fig. 13

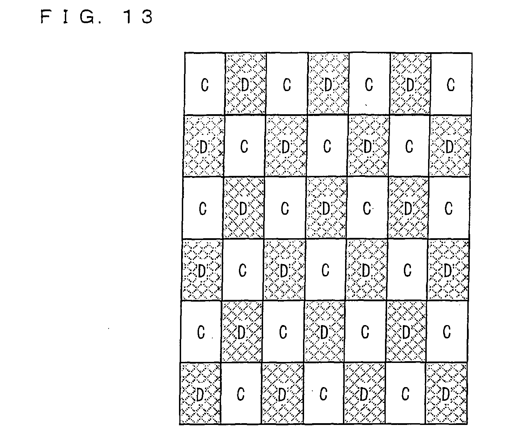

   Fig. 13 illustrates an example of an arrangement of pixel electrodes in the liquid crystal display device of Embodiment 3. In this drawing, pixel electrodes C and pixel electrodes D are alternately arranged in a checkered manner.
Fig. 14

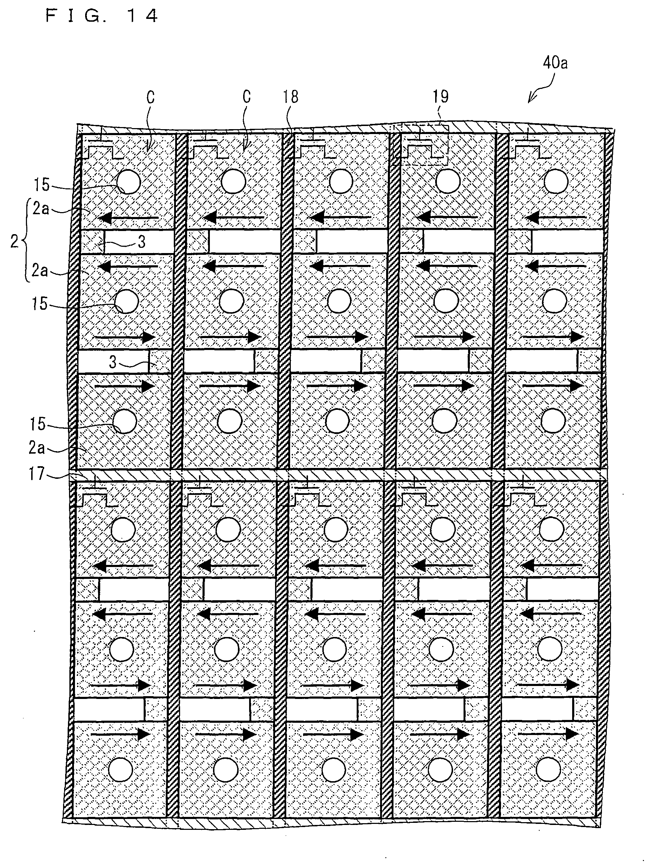

   Fig. 14 illustrates a comparative example of the liquid crystal display device according to Embodiment 3 and is a plan view of a liquid crystal display device configured so that pixel electrodes whose shapes are identical to each other are arranged.
Fig. 15

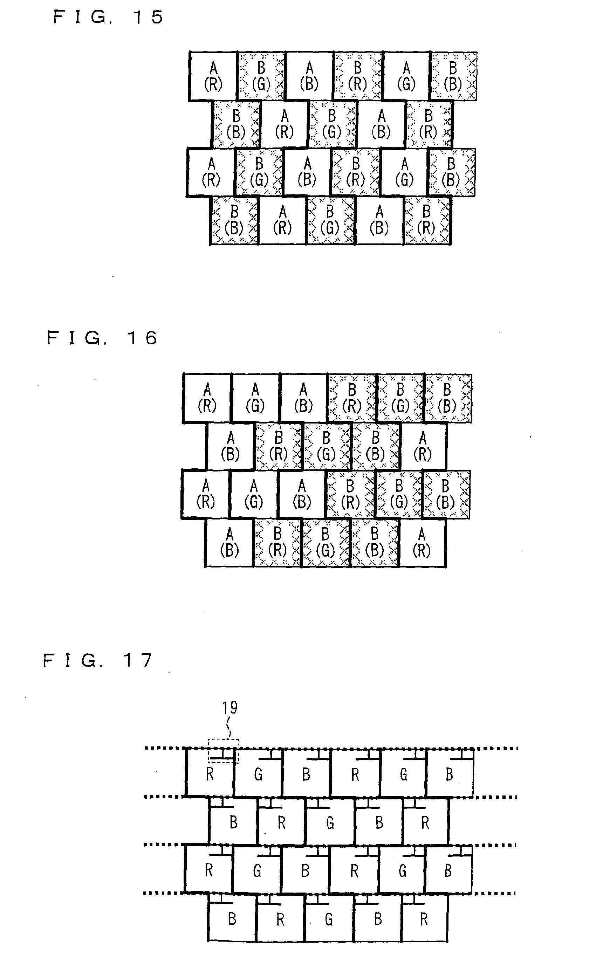

   Fig. 15 illustrates an example of an arrangement of pixel electrodes in the liquid crystal display device of Embodiment 2. In this drawing, pixel electrodes A and pixel electrodes B are alternately arranged in a checkered manner.
Fig. 16
   Fig. 16 illustrates another example of an arrangement of pixel electrodes in the liquid crystal display device of Embodiment 2. In this drawing, pixel electrodes of respective colors (R, G, B) are combined as a single set and pixel electrodes A and pixel electrodes B are alternately arranged in a checkered manner.
Fig. 17
   Fig. 17 illustrates an example of an arrangement of pixel electrodes in the liquid crystal display device of Embodiment 2 and is a schematic illustrating an example of an arrangement of colors, R, G, B, in a delta arrangement.
Fig. 18
   Each of (a) and (b) of Fig. 18 illustrates a configuration of pixel electrodes in a conventional liquid crystal display device. (a) is a plan view illustrating a configuration of pixel electrodes in the conventional liquid crystal display device. (b) is a cross sectional view taken along W-W of (a).

### Reference Signs List

- 2: Pixel electrode
- 3: Bridge (connection section)
- 2a: Sub pixel electrode
- 10: Liquid crystal display device
- 13: Color filter
- 17: Gate wiring
- 18: Source wiring
- 19: TFT element (switching element)
- 30: Liquid crystal display device
- 40: Liquid crystal display device
- A: Pixel electrode
- B: Pixel electrode
- C: Pixel electrode
- D: Pixel electrode
- z: Center line (axis connecting centers of sub pixel electrodes)

### Description of Embodiments

### [Embodiment 1]

One embodiment of the present invention is described below with reference to Fig. 1 through Fig. 9. Note that, the present invention is not limited to this.

The present embodiment describes, as an example of the liquid crystal display device of the present invention, a liquid crystal display device having a plurality of pixel electrodes provided in a lattice manner wherein pixel electrodes of two types different in shape are arranged in a checkered manner. Note that, in the present specification, a liquid crystal display device having a plurality of pixel electrodes provided in a lattice manner is referred to as a liquid crystal display device in which pixel electrodes are arranged in a stripe manner.

First, a basic configuration of a liquid crystal display device 10 of the present embodiment is described with reference to (a) and (b) of Fig. 2. (a) of Fig. 2 is a plan view of the liquid crystal display device 10. (b) of Fig. 2 is a cross sectional view taken along X-X' of (a) of Fig. 2.

As illustrated in (a) and (b) of Fig. 2, the liquid crystal display device 10 of the present embodiment is a transmissive liquid crystal display device, and a liquid crystal panel includes: a TFT (Thin Film Transistor) side transparent substrate 1 such as a glass substrate or the like; a counter electrode side transparent substrate 11 provided opposite to the TFT side transparent substrate 1; and a vertically aligned mode liquid crystal layer 20 provided between the TFT side transparent substrate 1 and the counter electrode side transparent substrate 11. A vertical alignment film (not shown) is provided on each of the TFT side transparent substrate 1 and the counter electrode side transparent substrate 11 so as to be positioned on a face which is in contact with the liquid crystal layer 20. When no voltage is applied, liquid crystal molecules of the liquid crystal layer 20 are aligned substantially vertically with respect to a surface of the vertical alignment film. That is, the liquid crystal panel is based on a vertically aligned mode. The liquid crystal layer 20 includes a nematic liquid crystal material whose dielectric isotropy is negative.

The liquid crystal panel of the liquid crystal display device 10 includes: pixel electrodes 2 formed on the TFT side transparent substrate 1; and counter electrodes 12 formed on the counter electrode side transparent substrate 11, wherein the liquid crystal layer 20 provided between a pixel electrode 2 and a counter electrode 12 constitutes a pixel. Here, each of the pixel electrodes 1 and the counter electrodes 12 is constituted by a transparent conduction layer made of ITO (Indium Tin Oxide). Note that, color filters 13 corresponding to the pixels and black matrixes (light shielding layer) 14 each formed between color filters 13 adjacent to each other are provided on the counter electrode side transparent substrate 11 so as to face the liquid crystal layer 20, and the counter electrode 12 is provided on them. However, the configuration is not necessarily limited to this, and it may be so configured that the color filter 13 and the black matrix 14 are provided on the counter electrode 12 so as to face the liquid crystal layer 20.

As illustrated in (a) of Fig. 2, on the TFT side transparent substrate 1, there are provided a plurality of gate wirings 17 which are parallel to each other and extend in a horizontal direction in (a) of Fig. 2 and a plurality of source wirings 18 which are parallel to each other and extend in a vertical direction in (a) of Fig. 2 so as to be orthogonal to the respective gate wirings 17. In the vicinity of a junction of each gate wiring 17 and each source wiring 18, a TFT element 19 is provided as a switching element electrically connected to the gate wiring 17 and the source wiring 18. The pixel electrode 2 is provided on an area surrounded by a pair of the gate wirings 17 and a pair of source wirings 18 so as to correspond to each TFT element 19.

As illustrated in (a) of Fig. 2, a pixel electrode 2 of red, a pixel electrode 2 of green, and a pixel electrode 2 of blue are sequentially provided on the liquid crystal panel, and each pixel electrode 2 includes two sub pixel electrodes 2a arranged in a line. Between the two sub pixel electrodes 2a, a bridge 3 is provided as a connection section whose width is narrower than a width of the sub pixel electrode 2a, and slits 4 are formed on both sides of the bridge 3. The bridge 3 electrically connects the sub pixel electrodes 2a. Note that, each of the sub pixel electrodes 2a has a rectangular shape, but the shape is not limited to this, and the shape may be other polygon such as oblong, pentagon, hexagon, and the like, or circular, or elliptical.

Further, on the counter electrode 12, a rivet section 15 serving as a liquid crystal layer side convex portion having a circular cone-like shape is provided so as to be positioned on a portion opposite to a central position of each of the sub pixel electrodes 2a.

Thus, when a predetermined voltage is applied to the liquid crystal layer 20, below the rivet section 15, liquid crystal molecules are aligned axis-symmetrically with respect to a central axis of the rivet section 15 in the liquid crystal layer 20. That is, the rivet section 15 causes a position of the central axis of the axis-symmetric alignment to be fixed. Further, in the periphery of the rivet section 15, a slant electric field is generated by a voltage applied between the sub pixel electrode 2a and the counter electrode 12, and this slant electric field defines a direction in which liquid crystal molecules are inclined. As a result, a liquid crystal panel whose viewing angle is wide is obtained.

Note that, a shape of the rivet section 15 provided in order to fix the alignment central axis of the axis-symmetric alignment is preferably circular, but the shape is not limited to this. However, in order to exhibit an alignment regulating force equally in all the directions, it is preferable that the shape is polygon having four or more corners, and it is preferable that the shape is regular polygon. Further, a cross sectional shape of its front surface is not necessarily trapezoid, and the cross sectional shape may be oblong or triangle.

The liquid crystal display device 10 has a light shielding region between pixels adjacent to each other, and a wall structure 22 is provided on the TFT side transparent substrate 1 so as to be positioned within the light shielding region. Here, the light shielding region is provided on the TFT side transparent substrate so as to be positioned in a peripheral region of the pixel electrode 2, and the light shielding region is a region from which light is shielded by, for example, the TFT element 19, the gate wiring 17, the source wiring 18, or the black matrix 14 formed on the counter electrode side transparent substrate 11, and this light shielding region has no influence on display. Thus, the wall structure 22 formed on the light shielding region does not have bad influence on display.

Note that, the wall structure 22 is provided as a continuous wall surrounding the pixel, but the configuration is not limited to this, and the wall may be cut into a plurality of walls. The wall structure 22 defines a border formed in the vicinity of an outline of a pixel in a liquid crystal domain, and it is preferable that the wall structure has a certain length. For example, in case where the wall structure 22 is includes plural walls, it is preferable that a length of each wall is longer than a length of a gap between walls adjacent to each other.

Note that, it is preferable that, for example, a support for defining a thickness of the liquid crystal layer 20 (this thickness is referred to also as a cell gap) is formed on the light shielding region (here, a region defined by the black matrix 14), since this does not deteriorate display quality.

Note that, as described above, the TFT element 19 and circuit components such as the gate wiring 17 and the source wiring 18 connected to the TFT element are provided on the TFT side transparent substrate 1 so as to face the side of the liquid crystal layer 20. Further, the TFT side transparent substrate 1, the circuit components and the pixel electrode 2 formed on the TFT side transparent substrate 1, the wall structure 22, the alignment film, and the like are collectively referred to as an active matrix substrate. While, the counter electrode side transparent substrate 11, the color filter 13 formed on the counter electrode side transparent substrate 11, the black matrix 14, the counter electrode 12, the alignment film, and the like are collectively referred to as a color filter substrate.

Further, although not described above, the liquid crystal display device 10 further includes a pair of polarization plates disposed opposite to each other via the TFT side transparent substrate 1 and the counter electrode side transparent substrate 11. The pair of polarization plates are disposed so that their transmission axes are orthogonal to each other.

Incidentally, in the conventional liquid crystal display device, the bridge 3 connecting the sub pixel electrodes 2a exists on a line connecting centers of the rivet sections 15 and the bridge 3 exists in a central position between the sub pixel electrodes 2a having a symmetric structure, so that a direction in which liquid crystal molecules on the bridge 3 are aligned is not determined. Thus, there occurs such a phenomenon that the formed alignment central axis of liquid crystal molecules deviates to either left or right of the bridge 3. The conventional design fails to control a direction in which the alignment central axis deviates, so that this causes display quality deterioration such as roughness, burning, afterimage, and the like. That is, for example, directions in which alignment central axes deviate are random in the entire liquid crystal panel, which results in roughness of display.

A method for overcoming this disadvantage may be such that the bridge 3 is made thinner. However, if the bridge 3 is made thinner, conduction between the sub pixel electrodes 2a deteriorates. On the other hand, the bridge 3 may be made thicker. However, even if the bridge 3 is made thicker, a direction of liquid crystal molecules is not fixed as long as the sub pixel electrodes 2a and the bridge 3 are symmetrically positioned. Further, a gap between the sub pixel electrodes 2a may be increased, but this raises such a problem that an aperture ratio becomes lower.

Thus, as illustrated in (a) of Fig. 2, in the liquid crystal display device 10 of the present embodiment, the bridge 3 of the pixel electrode 2 is provided so as to deviate from a center line (axis) connecting centers of the sub pixel electrodes 2a.

Fig. 3 illustrates one type of a shape of the pixel electrode 2 provided on the liquid crystal display device 10. The pixel electrode 2 of Fig. 3 is such that the bridge 3 deviates from a center line z to a right side. The pixel electrode having such a shape that the bridge deviates to a left side is referred to as A.

Here, a distance (offset amount) from the center line z to a center line z1 of the bridge 3 is referred to as x1. In obtaining this offset amount x1, for example, a numerical value described in Patent Literature 2 can be adopted.

Incidentally, in case of a pixel electrode in which a bridge is provided so as to deviate from the center line as described above, the following problem occurs. With reference to Fig. 9, this problem is described as follows.

Fig. 9 illustrates a comparative example of the liquid crystal display device according to the present embodiment. A liquid crystal display device 10a of Fig. 9 is such that only pixel electrodes A are arranged in a lattice manner. In the liquid crystal display device 10a, as illustrated by arrows in Fig. 9, connection electrodes of all pixels deviate only in one direction, so that alignment states of liquid crystal molecules in vicinities of the bridges 3 of all the pixel electrodes A deviate in the same manner.

Under this condition, a displayed image appears to be different between a case where the observer views the liquid crystal panel from a left side and a case where the observer views the liquid crystal panel from a right side.

Thus, in the liquid crystal display device of the present invention, the shape of the pixel electrode is not limited to one type, and two or more types are adopted, and pixel electrodes of respective types are arranged in a regular manner, and the pixel electrodes of respective types are populated with equal ratios.

As an example, in the liquid crystal display device 10 of the present embodiment, positions of the bridges each connecting the two sub pixel electrodes 2a are made different from each other, so that there are formed pixel electrodes of plural types whose shapes are different from each other. More specifically, the pixel electrodes 2 are categorized into a pixel electrode A (see Fig. 3) and a pixel electrodes B respectively including the bridges 3 which are symmetrically located with respect to an axis (center line) connecting centers of sub pixel electrodes 2a.

Fig. 4 illustrates a shape of the pixel electrode B. The pixel electrode 2(B) is such that the bridge 3 deviates from the center line z to a left side. Here, if a distance (offset amount) from the center line z to the center line z2 of the bridge 3 is defined as x2, x2=x1.

Further, as illustrated in Fig. 1, in the liquid crystal display device 10 of the present embodiment, the pixel electrodes A and the pixel electrodes B are alternately arranged in a checkered manner. That is, the pixel electrodes are arranged so that a direction in which the bridge 3 of a pixel electrode 2 deviates and a direction in which the bridge 3 of an adjacent pixel electrode 2 deviates are opposite to each other. Note that, Fig. 5 schematically illustrates an arrangement of the pixel electrodes A and the pixel electrodes B.

As illustrated in Fig. 5, the pixel electrodes A and the pixel electrodes B are alternately arranged in a checkered manner, so that a direction in which liquid crystal molecules are aligned in a pixel electrode and a direction in which liquid crystal molecules are aligned in an adjacent pixel electrode can be made different from each other. Thus, it is possible to prevent display quality deterioration such as roughness, burning, afterimage, and the like, which are caused by disorder of alignment of liquid crystal molecules, even if the liquid crystal panel is viewed from any direction. The pixel electrodes whose connection electrodes deviate in directions indicated by arrows in Fig. 1 are arranged in a checkered manner, so that alignment states of liquid crystal molecules in the vicinity of each connection electrode vary according to the deviating direction.

Further, the pixel electrodes A and the pixel electrodes B are arranged in a checkered manner, so that the pixel electrodes of two types whose shapes are different from each other can be populated with equal ratios. This makes it possible to prevent a displayed image from being differently viewed in case where the liquid crystal panel is viewed from left and right directions respectively.

Note that, each of layouts of pixel electrodes illustrated in Fig. 1 and Fig. 5 is an example, and the present invention is not limited to this. Each of Fig. 6 through Fig. 8 illustrates another example in which the pixel electrodes A and the pixel electrodes B are arranged in a regular manner.

Fig. 6 illustrates an example where three pixels arranged alongside are regarded as a single set and sets obtained in this manner are arranged in a checkered manner. Fig. 6 illustrates a pixel display color as a parenthesis. In this manner, three pixels arranged alongside are regarded as a single set, so that a pixel electrode of R (red), a pixel electrode of G (green), and a pixel electrode of B (blue) exist in the single set. Thus, as to each of red, green, and blue, a ratio of the pixel electrodes A and a ratio of the pixel electrodes B are equal to each other. According to this configuration, it is possible to suppress a displayed image from being differently viewed in case where each displayed color is viewed from left and right sides. Thus, a display property in left and right sides can be made evener.

Fig. 7 illustrates an example where a line of the pixel electrodes A positioned along a gate wiring and another line of the pixel electrodes B positioned along another gate wiring are alternately arranged. Further, Fig. 8 illustrates an example where a line of the pixel electrodes A positioned along a gate wiring and another line of the pixel electrodes B positioned along another gate wiring are alternately arranged.

Here, the phrase "a line of the pixel electrodes positioned along a gate wiring (or a source wiring) and another line of the pixel electrodes positioned along another gate wiring (or another source wiring) are alternately arranged" means a state in which: pixel electrodes connected to a single gate wiring (source wiring) 17a via TFT elements are pixel electrodes whose shapes are identical to each other (e.g., pixel electrodes A) and pixel electrodes connected to a single gate wiring 17b, adjacent to the gate wiring 17a, via TFT elements are pixel electrodes whose shapes are identical to each other (e.g., pixel electrodes B).

Note that, it is preferable that, out of the respective pixel electrodes arranged in a lattice manner, pixel electrodes arranged in the same column or the same row (that is, pixel electrodes connected to the single source wiring or the single gate wiring) are varied or alternated in shape. That is, in each of examples illustrated in Fig. 5 through Fig. 8, an example of the pixel arrangement illustrated in Fig. 5 and an example of the pixel arrangement illustrated in Fig. 6 are more preferable. According to this, it is possible to further suppress a displayed image from being differently viewed in case where the liquid crystal panel is viewed from left and right directions. As a result, a display property in respective directions can be made evener.

### [Embodiment 2]

Next, with reference to Fig. 10 and Fig. 15 through Fig. 17, Embodiment 2 of the present invention is described.

Embodiment 1 described an example of the liquid crystal display device in which the respective pixel electrodes are arranged in a stripe manner. Embodiment 2 will describe an example of a liquid crystal display device in which pixel electrodes are alternated (so-called delta arrangement liquid crystal display device).

Fig. 10 illustrates a configuration of pixel electrodes of a liquid crystal display device 30 according to the present embodiment. In the liquid crystal display device 30, the same reference numerals are given to members having the same names as those in the liquid crystal display device 10 of Embodiment 1, and descriptions thereof are omitted.

On a liquid crystal panel of the liquid crystal display device 30, gate wirings 17 to which scanning signals are respectively applied and source wirings 18 to which video signals are respectively applied are provided so as to cross each other. In the vicinity of each junction of the gate wiring 17 and the source wiring 18, a TFT element (switching element) 19 is provided. A pixel electrode 2 is provided so as to correspond to each TFT element 19 surrounded by a pair of gate wirings 17 adjacent to each other and a pair of source wirings 18 adjacent to each other.

Further, each pixel electrode 2 includes two sub pixel electrodes 2a arranged in a line. Between the two sub pixel electrodes 2a, a bridge 3 is formed as a connection section whose width is narrower than a width of the sub pixel electrode 2a. As in the liquid crystal display device 10, also the liquid crystal display deice 30 is configured so that pixel electrodes of two types whose shapes are different from each other, i.e., pixel electrodes A and pixel electrodes B are populated with equal ratios. As a result, it is possible to suppress a displayed image from being differently viewed in case where the liquid crystal panel is viewed from left and right directions.

Further, in the liquid crystal display device 30, an arrangement of pixel electrodes having TFT elements 19 connected to a single gate wiring 17a and an arrangement of pixel electrodes having TFT elements 19 connected to a gate wiring 17b (second gate wiring) adjacent to the foregoing gate wiring 17a deviate from each other so that the deviation corresponds to a half (half pitch) of a width d of the pixel electrode in a direction in which the gate wiring extends. In this manner, the pixel electrodes 2 of the liquid crystal display device 30 are delta-arranged.

Here, an arrangement of colors, i.e., red, green, blue in the delta arrangement is as illustrated in Fig. 17. In Fig. 17, a dotted line in a horizontal direction indicates the gate wiring, and a line vertically extending in a partially rectangular manner indicates the source wiring. Further, Fig. 17 illustrates also the TFT element 19.

In this manner, the pixel electrodes 2 are arranged as the delta arrangement, so that it is possible to display an image smoother than an image realized by the stripe arrangement. Particularly, in a color liquid crystal display device having color filters of RGB, if the delta arrangement is adopted, respective color components can be evenly dispersed in a display screen of the liquid crystal panel.

Further, the liquid crystal display device 30 is configured so that the pixel electrodes A and the pixel electrodes B are alternately arranged in the pixel electrode arrangement connected to the single gate wiring 17. In this manner, the pixel electrodes A and the pixel electrodes B are alternately arranged, so that an alignment direction of liquid crystal molecules in a vicinity of a bridge 3 of a pixel can be made different from an alignment direction of liquid crystal molecules in a vicinity of a bridge 3 of an adjacent pixel as illustrated in Fig. 10. Thus, in each pixel electrode arrangement, an alignment direction of liquid crystal molecules in a vicinity of a bridge is different from an alignment direction of liquid crystal molecules in a vicinity of another bridge, so that it is possible to prevent occurrence of any horizontal streak in a displayed image.

In the liquid crystal display device 30 according to the present embodiment, the pixel electrodes A and the pixel electrodes B are alternated (this arrangement is referred to as checkered arrangement). Fig. 15 is a schematic illustrating an example of a pixel arrangement in which the pixel electrodes A and the pixel electrodes B are arranged in a checkered manner as the delta arrangement. Fig. 15 corresponds to Fig. 5 concerning the stripe arrangement. Fig. 15 illustrates a pixel display color as a parenthesis.

However, the arrangement of the pixel electrodes A and the pixel electrodes B is an example of the present invention, and the present invention is not limited to this configuration.

Fig. 16 illustrates another example where the pixel electrodes A and the pixel electrodes B are arranged in a regular manner.

Fig. 16 illustrates an example where three pixels arranged alongside are regarded as a single set and they are arranged in a checkered manner in pixel electrodes of the delta arrangement. Fig. 16 corresponds to Fig. 6 concerning the stripe arrangement. Fig. 16 illustrates a pixel display color as a parenthesis. In this manner, three pixels arranged alongside are regarded as a single set, so that an R (red) pixel electrode, a G (green) pixel electrode, and a B (blue) pixel electrode exist in a single set. Thus, as to the RGB colors, a ratio of the pixel electrodes A and a ratio of the pixel electrodes B are equal to each other. According to this configuration, it is possible to suppress a displayed image from being differently viewed in case where each displayed color is viewed from left and right sides. Thus, a display property in left and right directions can be made evener.

Note that, as in the present embodiment, it is preferable to configure the liquid crystal display device whose pixel electrodes are in the delta arrangement so that: as illustrated in Fig. 10 and Fig. 17, out of plural pixel electrodes having TFT elements 19 connected to a single source wiring 18, pixel electrodes 2 adjacent to each other in a direction in which the source wiring 18 extends are positioned opposite to each other via the source wiring 18.

According to this configuration, it is possible to realize such effect that complicate color switching is not required. That is, the TFT elements 19 are provided in this manner, so that the TFT elements for pixel electrodes corresponding to the same color are provided on the single source wiring. Thus, it is not necessary to carry out the color switching in the single source wiring.

### [Embodiment 3]

Next, with reference to Fig. 11 through Fig. 14, Embodiment 3 of the present invention is described.

Each of the aforementioned embodiments described an example where the two sub pixel electrodes 2a are connected by a single bridge 3. However, in the present invention, the number of the sub pixel electrodes is not limited to two, and three or more sub pixel electrodes may be arranged in a line so as to constitute a pixel electrode.

Embodiment 3 describes an example where the pixel electrode is constituted of three sub pixel electrodes. Fig. 11 illustrates a configuration of pixel electrodes of a liquid crystal display device 40 according to the present embodiment. Note that, in the liquid crystal display device 40, the same reference numerals are given to members having the same names as those in the liquid crystal display device 10 of Embodiment 1, and descriptions thereof are omitted.

On a liquid crystal panel of the liquid crystal display device 40, gate wirings 17 to which scanning signals are respectively applied and source wirings 18 to which video signals are respectively applied are provided so as to cross each other. In the vicinity of each junction of the gate wiring 17 and the source wiring 18, a TFT element (switching element) 19 is provided. A pixel electrode 2 is provided so as to correspond to each TFT element 19 surrounded by a pair of gate wirings 17 adjacent to each other and a pair of source wirings 18 adjacent to each other.

In the present embodiment, each pixel electrode is constituted of three sub pixel electrodes 2a arranged in a line. Among the three sub pixel electrodes 2a, there are formed bridges 3 each of which has a width narrower than a width of each sub pixel electrode 2a.

Further, in the liquid crystal display device 40 of the present embodiment, positions of the bridges 3 are different from each other, so that shapes of pixel electrodes of two types (a pixel electrode C and a pixel electrode D) are different from each other, and these pixel electrodes constitute the liquid crystal panel.

Each of (a) and (b) of Fig. 12 illustrates a shape of each pixel electrode included in the liquid crystal display device 40.

In the pixel electrode C illustrated in (a) of Fig. 12, a bridge 3 connecting upper two sub pixel electrodes, out of three sub pixel electrodes 2a constituting the pixel electrode, deviates to a left side from an axis (center line) z which connects centers of the sub pixel electrodes 2a, and a bridge 3 connecting lower two sub pixel electrodes deviates to a right side from the axis (center line) z which connects centers of the sub pixel electrodes 2a.

While, in the pixel electrode D illustrated in (b) of Fig. 12, a bridge 3 connecting upper two sub pixel electrodes, out of three sub pixel electrodes 2a constituting the pixel electrode, deviates to a right side from an axis (center line) z which connects centers of the sub pixel electrodes 2a, and a bridge 3 connecting lower two sub pixel electrodes deviates to a left side from the axis (center line) z which connects centers of the sub pixel electrodes 2a.

In this manner, the pixel electrode C and the pixel electrode D are symmetrically shaped. The pixel electrodes C and the pixel electrodes D are arranged in a regular manner, and a ratio of the pixel electrodes C and a ratio of the pixel electrode D are made equal to each other, so that a displayed image can be more evenly viewed in case where the liquid crystal display device 40 is viewed from both left and right directions.

Further, in the liquid crystal display device 40 of the present embodiment, as illustrated in Fig. 11, the pixel electrodes C and the pixel electrodes D are arranged in a checkered manner. That is, the pixel electrodes C and the pixel electrodes D are arranged so that a direction in which a bridge 3 of a pixel electrode 2 deviates is opposite to a direction in which a bridge 3 of an adjacent pixel electrode 2 deviates. Fig. 13 schematically illustrates an arrangement of the pixel electrodes C and the pixel electrodes D.

As illustrated in Fig. 13, the pixel electrodes C and the pixel electrodes D are arranged in a checkered manner, so that a direction in which liquid crystal molecules of a pixel electrode are aligned can be made different from a direction in which liquid crystal molecules of an adjacent pixel electrode are aligned. Thus, it is possible to prevent display quality deterioration such as roughness, burning, afterimage, and the like, which are caused by disorder of alignment of liquid crystal molecules, even if the liquid crystal panel is viewed from any direction.

Further, the pixel electrodes C and the pixel electrodes D are arranged in a checkered manner as described above, so that the pixel electrodes of two types whose shapes are different from each other are populated with equal ratios. Thus, it is possible to suppress a displayed image from being differently viewed in case where the liquid crystal panel is viewed from left and right directions.

Note that, each of layouts of pixel electrodes illustrated in Fig. 11 and Fig. 13 is an example, and the present invention is not limited to this.

Note that, for comparison, Fig. 14 illustrates a plan view of a liquid crystal display device 40a constituted of pixel electrodes having shapes identical to each other. A deviating direction of the connection electrode section is indicated by an arrow. In case of a pixel electrode configuration illustrated in Fig. 14, an alignment direction of liquid crystal molecules in a vicinity of a bridge of a sub pixel electrode 2a and an alignment direction of liquid crystal molecules in a vicinity of a bridge of a horizontally adjacent sub pixel electrode 2a are identical to each other, but an alignment direction of liquid crystal molecules in a vicinity of a bridge 3 of a sub pixel electrode 2a and an alignment direction of liquid crystal molecules in a vicinity of a bridge 3 of a vertically adjacent sub pixel electrode 2a are opposite to each other.

If an alignment direction of liquid crystal molecules in one line is opposite to an alignment direction of liquid crystal molecules in another line as described above, a horizontal streak is recognized in a single pixel in case where the observer views the liquid crystal display device from any of left and right sides.

Note that, as in the present embodiment, in case where the three or more sub pixel electrodes are arranged in a line, it is preferable to provide bridges 3 in a single pixel electrode so that a direction in which a bridge 3 deviates from a center line z of a sub pixel electrode 2a is opposite to a direction in which a bridge 3 deviates from a center line z between sub pixel electrodes 2a.

Thus, in the vertically aligned mode liquid crystal display device 10 in which three or more sub pixel electrodes 2a are arranged in a line, it is possible to more surely prevent display quality deterioration such as roughness, burning, afterimage, and the like, which are caused by disorder of alignment of liquid crystal molecules, even if the liquid crystal panel is viewed from any direction.

As described above, a liquid crystal display device according to the present invention comprises a liquid crystal panel in which a plurality of pixel electrodes are arranged, wherein: shapes of the pixel electrodes are asymmetric, and the pixel electrodes are categorized into plural types different in shape, and the liquid crystal panel is configured so that the pixel electrodes of the plural types are alternated in a regular manner, and the pixel electrodes of the plural types are populated with equal ratios.

In the present invention, as described above, pixel electrodes of plural types whose shapes are different from each other are used as pixel electrodes having asymmetric shapes. According to this configuration, alignment states of liquid crystal molecules of the respective pixel electrodes can be made different from each other.

Further, according to the foregoing configuration, pixel electrodes of different types are arranged in a regular manner and the pixel electrodes of the respective types are populated with equal ratios, so that it is possible to suppress liquid crystal molecules of the pixel electrodes from being aligned in only one direction. Thus, in case where the display device is observed from left and right directions, it is possible to suppress a displayed image from being differently viewed, thereby improving display quality.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

According to the present invention, in a liquid crystal display device comprising pixel electrodes of plural types whose shapes are different from each other, it is possible to suppress a displayed image from differently viewed in case where the display device is viewed from left and right directions, and it is possible to improve display quality. The present invention is capable of contributing to improvement of display quality in a liquid crystal display device and the like in which each pixel electrode is constituted of plural sub pixel electrodes.

## Claims

1. A liquid crystal display device, comprising a liquid crystal panel in which a plurality of pixel electrodes are arranged, wherein:
shapes of the pixel electrodes are asymmetric, and the pixel electrodes are categorized into plural types different in shape, and
the liquid crystal panel is configured so that the pixel electrodes of the plural types are alternated in a regular manner, and the pixel electrodes of the plural types are populated with equal ratios.

2. The liquid crystal display device as set forth in claim 1, wherein:
each of the pixel electrodes includes a combination of at least two sub pixel electrodes, and a connection section for connecting the sub pixels, the connecting section having a width narrower than a width of each of the sub pixels, and
the difference in shape of the pixel electrodes of the plural types is attributed to difference as to where the connection section is.

3. The liquid crystal display device as set forth in claim 2, wherein:
the liquid crystal panel is based on a vertically aligned mode, and
the connection section is positioned so as to deviate from an axis connecting centers of the sub pixel electrodes.

4. The liquid crystal display device as set forth in claim 3, wherein:
the pixel electrodes are categorized into two types in terms of their shapes, and
the pixel electrodes of the two types respectively include connection sections which are symmetrically located with respect to an axis connecting centers of sub pixel electrodes.

5. The liquid crystal display device as set forth in any one of claims 1 through 4, further comprising color filters of plural colors, wherein:
the color filters of plural colors are provided in association with the pixel electrodes, respectively and
the pixel electrodes of the plural types whose colors are identical to each other and whose shapes are different from each other are populated with equal ratios.

6. The liquid crystal display device as set forth in claim 3, wherein:
the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and
the pixel electrodes are aligned in rows by being connected respectively with the gate wirings via the switching elements, in such a manner that the pixel electrodes in each row are shifted from pixel electrodes in a row adjacent to that row by a half of a width of the pixel electrodes in a direction in which the gate wirings extend.

7. The liquid crystal display device as set forth in claim 3, wherein:
the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and
the pixel electrodes are connected to the gate wirings and the source wirings via the switching element, respectively, and
an arrangement of pixel electrodes electrically connected to the source wiring or the gate wiring includes pixel electrodes of different types.

8. The liquid crystal display device as set forth in any one of claims 1 through 4, wherein:
the pixel electrodes are categorized into two types in terms of their shapes, and
the pixel electrodes of the two types are alternated in a checkered manner.

9. The liquid crystal display device as set forth in any one of claims 1 through 4, wherein:
the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and
the pixel electrodes are connected to the gate wirings and the source wirings via the switching element, respectively, and
the pixel electrodes are categorized into two types in terms of their shapes, and
the pixel electrodes of the two types are alternately arranged so that each pixel electrode of each type is disposed along each source wiring.

10. The liquid crystal display device as set forth in any one of claims 1 through 4, wherein:
the liquid crystal panel includes (a) gate wirings to which scanning signals are applied, (b) source wirings to which video signals are applied, the gate wirings and the source wirings crossing each other, and (c) switching elements each of which is provided in a vicinity of a junction of each gate wiring and each source wiring and each of which is electrically connected to the gate wiring and the source wiring, and
the pixel electrodes are connected to the gate wirings and the source wirings via the switching element, respectively, and
the pixel electrodes are categorized into two types in terms of their shapes, and
the pixel electrodes of the two types are alternately arranged so that each pixel electrode of each type is disposed along each gate wiring.
